# EUROPEAN PATENT APPLICATION

(11) **EP 2 759 961 A1**
(43) Date of publication of application: **30.07.2014**
(21) Application number: 12833441.4
(22) Date of filing: 19.09.2012
(51) Int. Cl.: G06K 19/07

(54) **IC CARD, PORTABLE ELECTRONIC DEVICE, AND IC CARD CONTROL METHOD**

(30) Priority: 21.09.2011 JP 2011206168
(71) Applicant: Kabushiki Kaisha Toshiba, Inc., Tokyo 105-8001 (JP)
(72) Inventor: ICHINOHE, Miho, Tokyo 105-8001 (JP)
(74) Representative: HOFFMANN EITLE
(86) International application number: PCT/JP2012/073918
(87) International publication number: WO 2013/042682

(57) **Abstract**

An IC card according to an embodiment is an IC card which executes a process in accordance with a command transmitted from an external device. The IC card includes first storage means for pre-storing an application including a plurality of structures, reception means for receiving a command transmitted from the external device, and second storage means for identifying, when a write command for writing the application stored by the first storage means has been received by the reception means, a structure missing in the application stored by the first storage means, and storing the identified structure.

## Description

### Technical Field

Embodiments described herein relate generally to an IC card, a portable electronic device, and a method of controlling an IC card.

### Background Art

In general, an IC card, which is used as a portable electronic device, includes a card-shaped main body which is formed of plastics, etc., and an IC module which is embedded in the main body. The IC module includes an IC chip. The IC chip includes a nonvolatile memory such as an EEPROM (Electrically Erasable Programmable Read-Only Memory) or a flash ROM, which can retain data even in a power-off state, a CPU which executes various arithmetic operations, and a RAM which is used in the processing of the CPU.

The IC card is, for example, an IC card which supports the International Standard ISO/IEC7816. The IC card is excellent in portability, and can execute communication with an external device and complex arithmetic processes. In addition, since counterfeiting is difficult, it is assumed that the IC card stores highly confidential information and is used in a security system, electronic commerce, etc.

When the IC card has received a command from a processing device which processes the IC card, the IC card executes an application in accordance with the received command. Thereby, the IC card can realize various functions.

### Citation List

### Patent Literature

Patent document 1: Jpn. Pat. Appln. KOKAI Publication No. 2000-348146

### Summary of Invention

### Technical Problem

The application as described above is stored in a ROM or a nonvolatile memory of the IC card. When the IC card executes the application, the IC card reads out the application from the ROM or nonvolatile memory, and develops the application in the nonvolatile memory or a RAM in a state in which the application is executable. By executing the developed application, the IC card executes various processes.

However, in recent years, the IC card is used in various fields, and at the stage of primary issuance, various applications of the IC card are stored in the ROM or nonvolatile memory. The entirety of one application is stored in the ROM or nonvolatile memory. Thus, there is a problem that the number of applications, which can be stored in the ROM, decreases. As a result, there arises a problem that a ROM needs to be prepared in accordance with purposes of use, leading to an increase in cost. In addition, there is problem that when a ROM is taken away, the application may possibly be unlawfully operated.

Thus, the object is to provide an IC card with a higher convenience, a portable electronic device, and a method of controlling an IC card.

### Solution to Problem

An IC card according to an embodiment is an IC card which executes a process in accordance with a command transmitted from an external device. The IC card includes first storage means for pre-storing an application including a plurality of structures, reception means for receiving a command transmitted from the external device, and second storage means for identifying, when a write command for writing the application stored by the first storage means has been received by the reception means, a structure missing in the application stored by the first storage means, and storing the identified structure.

### Brief Description of Drawings

FIG. 1 is a view for describing a structure example of an IC card process system according to an embodiment.
FIG. 2 is a view for describing an example of an IC card according an embodiment.
FIG. 3 is a view for describing an example of an IC card according an embodiment.
FIG. 4 is a view for describing an example of an IC card according an embodiment.
FIG. 5 is a view for describing an example of an IC card according an embodiment.
FIG. 6 is a view for describing an example of an IC card according an embodiment.
FIG. 7 is a view for describing an example of an IC card according an embodiment.

### Best Mode for Carrying Out the Invention

An IC card according to an embodiment, a portable electronic device and a method of controlling an IC card will now be described in detail with reference to the accompanying drawings.

A portable electronic device (IC card) 20 according to an embodiment and a processing device (terminal device) 10, which processes the IC card 20, have, for example, functions of contact communication and/or non-contact communication. Thereby, the IC card 20 and terminal device 10 can transmit/receive data to/from each other.

In addition, in the embodiment, a description is given of an IC card 20 which executes various processes by executing a Java applet (hereinafter referred to as "applet"), etc., which is composed by Java script (trademark), etc. Incidentally, even when the IC card 20 is configured to execute a process by executing other applications, etc., the present embodiment is similarly applicable.

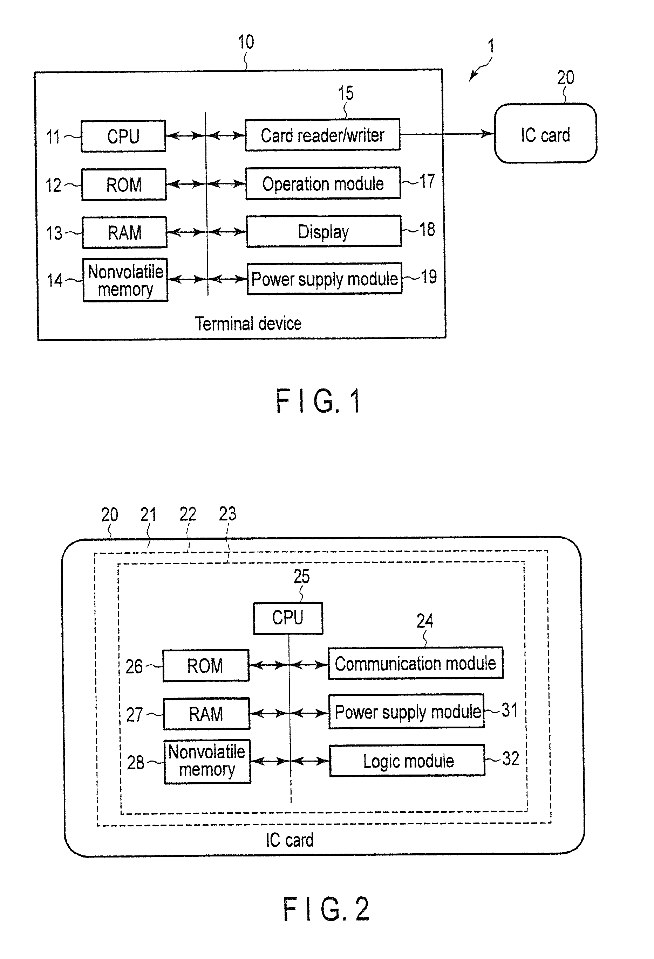

FIG. 1 illustrates a structure example of an IC card process system 1 according to an embodiment.

The IC card process system 1 includes a terminal device 10 which processes an IC card 20, and the IC card 20.

The terminal device 10 includes a CPU 11, a ROM 12, a RAM 13, a nonvolatile memory 14, a card reader/writer 15, an operation module 17, a display 18, and a power supply module 19. The CPU 11, ROM 12, RAM 13, nonvolatile memory 14, card reader/writer 15, operation module 17 and display 18 are interconnected via a bus.

The CPU 11 functions as a controller which executes overall control of the terminal device 10. The CPU 11 executes various processes, based on a control program and control data stored in the ROM 12 or nonvolatile memory 14. For example, the CPU 11 transmits/receives commands and responses to/from the IC card 20 via the card reader/writer 15.

The ROM 12 is a nonvolatile memory which prestores a program for control and control data. The RAM 13 is a volatile memory functioning as a working memory. The RAM 13 temporarily stores data, etc., which is being processed by the CPU 11. For example, the RAM 13 temporarily stores data which is transmitted/received to/from an external device via the card reader/writer 15. In addition, the RAM 13 temporarily stores a program which is executed by the CPU 11.

The nonvolatile memory 14 includes, for example, an EEPROM, an FRAM, etc. The nonvolatile memory 14 stores, for example, a program for control, control data, an application, and data for use in the application.

The card reader/writer 15 is an interface device for communicating with the IC card 20. The card reader/writer 15 executes data transmission/reception to/from the IC card 20 by contact communication or non-contact communication.

When the card reader/writer 15 is used as an interface for contact communication, the card reader/writer 15 includes a slot in which the IC card 20 is inserted, and a plurality of contact terminals which are connected to a contact pattern provided on the IC card 20.

When the IC card 20 is inserted in the slot, the plural contact terminals of the card reader/writer 15 are connected to the contact pattern of the IC card 20. Thereby, the terminal device 10 and IC card 20 are electrically connected. The card reader/writer 15 supplies power to the IC card 20 which is inserted in the slot, supplies a clock to the IC card 20, inputs a reset signal to the IC card 20, and transmits/receives data to/from the IC card 20.

In addition, when the card reader/writer 15 is used as an interface of non-contact communication, the card reader/writer 15 includes a signal processor which executes a signal process on data which is transmitted/received, an an antenna having a predetermined resonance frequency.

The card reader/writer 15 executes, for example, by the signal processor, signal processes, such as encoding, decoding, modulation and demodulation, on the data which is transmitted/received. In addition, the card reader/writer 15 supplies the encoded and modulated data to the antenna. The antenna generates a magnetic field in accordance with the supplied data. Thereby, the terminal device 10 can transmit, in a non-contact manner, the data to the IC card 20 which is present within a range of communication.

Further, the antenna of the card reader/writer 15 detects a magnetic field and generates a signal in accordance with the detected magnetic field. Thereby, the card reader/writer 15 can receive a signal in a non-contact manner. The signal processor demodulates and decodes the signal received by the antenna. Thereby, the terminal device 10 can acquire original data which has been transmitted from the IC card 20.

The operation module 17 includes, for example, operation keys, and generates an operation signal, based on an operation which is input by an operator. The operation module 17 inputs the generated operation signal to the CPU. Thereby, the CPU 11 can execute a process based on the operation which has been input by the operator.

The display 18 displays various kinds of information, based on a signal for displaying video, which is input from the CPU 11, or from a display process module such as a graphic controller (not shown).

The power supply module 19 supplies power to the respective parts of the terminal device 10. The power supply module 19 receives, for example, power from a commercial power supply, converts the power to a predetermined voltage, and supplies the voltage to the respective parts of the terminal device 10.

FIG. 2 illustrates a structure example of an IC card 20 according to an embodiment.

As illustrated in FIG. 2, the IC card 20 includes, for example, a rectangular main body 21, and an IC module 22 which is incorporated in the main body 21. The IC module 22 includes an IC chip 23 and a communication module 24. The IC chip 23 and communication module 24 are formed in the IC module 22 in a state in which they are connected to each other.

In the meantime, the main body 21 may have any shape, other than the rectangular shape, if the main body 21 has such a shape that at least the IC module 22, in which the communication module 24 is provided, can be disposed.

The IC chip 23 includes the communication module 24, a CPU 25, a ROM 26, a RAM 27, a nonvolatile memory 28, a power supply module 31, and a logic module 32. The communication module 24, CPU 25, ROM 26, RAM 27, nonvolatile memory 28, power supply module 31 and logic module 32 are interconnected via a bus.

The communication module 24 is an interface for communicating with the card reader/writer 15 of the terminal device (external device) 10. The communication module 24 executes transmission/reception of data to/from the terminal device 10 by contact communication or non-contact communication.

When the communication module 24 is used as an interface for contact communication, the communication module 24 includes a contact pattern which is connected to the contact terminals of the card reader/writer 15. The contact pattern is a contact terminal which is formed on the surface of the IC module 22 by, for example, a metal with electrical conductivity. Specifically, the contact pattern is formed such that the contact pattern can be put in contact with the contact terminals of the card reader/writer 15 of the terminal device 10.

The contact pattern is formed such that a surface formed of the metal is divided into a plurality of areas. The respective divided areas function as terminals. The communication module 24 can execute transmission/reception of data to/from the card reader/writer 15 via the contact pattern.

In addition, when the communication module 24 is used as an interface of non-contact communication, the communication module 24 includes a signal processor and an an antenna.

The signal processor executes signal processes, such as encoding and load modulation, on the data which is transmitted to the terminal device 10. For example, the signal processor modulates (amplifies) data which is transmitted to the terminal device 10. The signal processor supplies the data, which has been subjected to the signal process, to the antenna.

The antenna is composed of a metallic wire which is provided in a predetermined shape in the IC module 22. The IC card 20 generates, by the antenna, a magnetic field in accordance with the data which is transmitted to the terminal device 10. Thereby, the IC card 20 can transmit data to the terminal device 10. In addition, the IC card 20 recognizes data which is transmitted from the terminal device 10, based on an induction current occurring in the antenna by electromagnetic induction.

For example, the signal processor executes demodulation and decoding on an induction current occurring in the antenna. For example, the signal processor executes analysis of a signal which is received by the antenna. Thereby, the communication module 24 obtains two-value logic data. The communication module 24 transmits the analyzed data to the CPU 25 via the bus.

The CPU 25 functions as a controller which executes overall control of the IC card 20. The CPU 25 executes various processes, based on a control program and control data stored in the ROM 26 or nonvolatile memory 28. For example, the CPU 25 executes various processes in accordance with commands which are received from the terminal device 10, and generates data, such as a response, as a processing result.

The ROM 26 is a nonvolatile memory which prestores a program for control and control data. The ROM 26 is incorporated in the IC card 20 in a state in which the control program and control data were stored in the ROM 26 at a stage of manufacture. Specifically, the control program and control data, which are stored in the ROM 26, are embedded in advance in accordance with the specifications of the IC card 20. In the embodiment, the ROM 26 is incorporated in the IC card 20 in a state in which a plurality of applets are prestored.

The RAM 27 is a volatile memory functioning as a working memory. The RAM 27 temporarily stores data, etc., which is being processed by the CPU 25. For example, the RAM 27 temporarily stores data which has been received from the terminal device 10 via the communication module 24. In addition, the RAM 27 temporarily stores data which is to be transmitted to the terminal device 10 via the communication module 24. Furthermore, the RAM 27 temporarily stores a program which is executed by the CPU 25.

The nonvolatile memory 28 includes, for example, a data writable and rewritable nonvolatile memory such as an EEPROM or a flash ROM. The nonvolatile memory 28 stores a control program and various data in accordance with purposes of operational use of the IC card 20. In the present embodiment, applets or part of applets are stored in the nonvolatile memory 28 at a stage of issuance.

The power supply module 31 supplies power to the respective parts of the terminal device 10. When the IC card 20 includes a structure for contact communication, the power supply module 31 supplies power, which is supplied from the card reader/writer 15 via the contact pattern of the communication module 24, to the respective parts of the IC card 20.

In addition, when the IC card 20 includes a structure for non-contact communication, power is generated based on an electric wave, in particular, a carrier wave, which is transmitted from the antenna of the card reader/writer 15. Further, the power supply module 31 generates an operation clock. The power supply module 31 supplies the generated power and operation clock to the respective parts of the IC card 20. The respective parts of the IC card 20, when supplied with power, transition to an operable state.

The logic module 32 is an arithmetic module which executes an arithmetic process by hardware. For example, based on a command from the terminal device 10, the logic module 32 executes processes such as encryption, decryption, and generation of a random number. For example, in a case of receiving a mutual authentication command from the terminal device 10, the logic module 32 generates a random number, and sends the generated random number to the CPU 25.

The IC card 20 is issued by primary issuance and secondary issuance. In the primary issuance, the terminal device 10 creates files for storing various data in the nonvolatile memory 28 of the IC card 20. Thereby, a Master File (MF), a Dedicated File (DF) and an Elementary File (EF) are created in the nonvolatile memory 28.

The MF is a file which becomes the root of a file structure. The DF is created at a level under the MF. The DF is a file which groups applets and components of the applets and stores them. The EF is created at a level under the DF. The EF is a file for storing various data. In addition, there may be a case in which the EF is placed immediately under the MF.

The kinds of the EF include a Working Elementary File (WEF) and an Internal Elementary File (IEF). The WEF is an EF for working, and stores personal information, etc. The IEF is an internal EF, and stores data such as an encryption key (encryption password) for security.

In the secondary issuance, individual data such as customer data is stored in the EF. Thereby, the IC card is set in an operable state.

In the meantime, in the embodiment, all or part of the above-described applets are stored at the stage of the primary issuance in the nonvolatile memory 28 of the IC card 20.

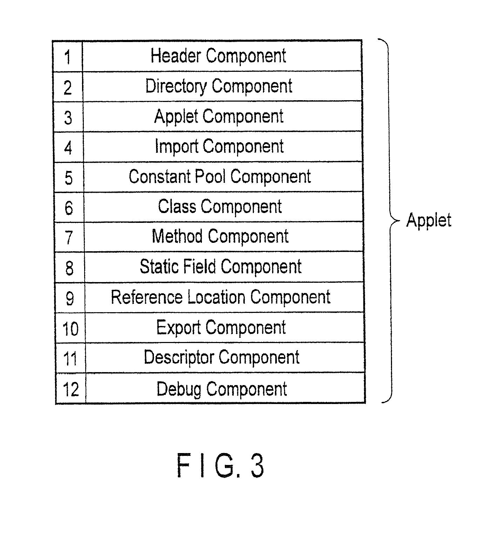

FIG. 3 illustrates an example of the applet. Incidentally, a Java applet is included in a predetermined component. As illustrated in FIG. 3, the applet includes "Header Component (Component 1)", "Directory Component (Component 2)", "Applet Component (Component 3)", "Import Component (Component 4)", "Constant Pool Component (Component 5)", "Class Component (Component 6)", "Method Component (Component 7)", "Static Field Component (Component 8)", "Reference Location Component (Component 9)", "Export Component (Component 10", "Descriptor Component (Component 11)", and "Debug Component (Component 12)".

The applet is normally executed by the CPU 25 when these components, except Component 11 and Component 12, are complete. In other words, Components 1 to 10 of the applet are minimum necessary components (main components) for the operation.

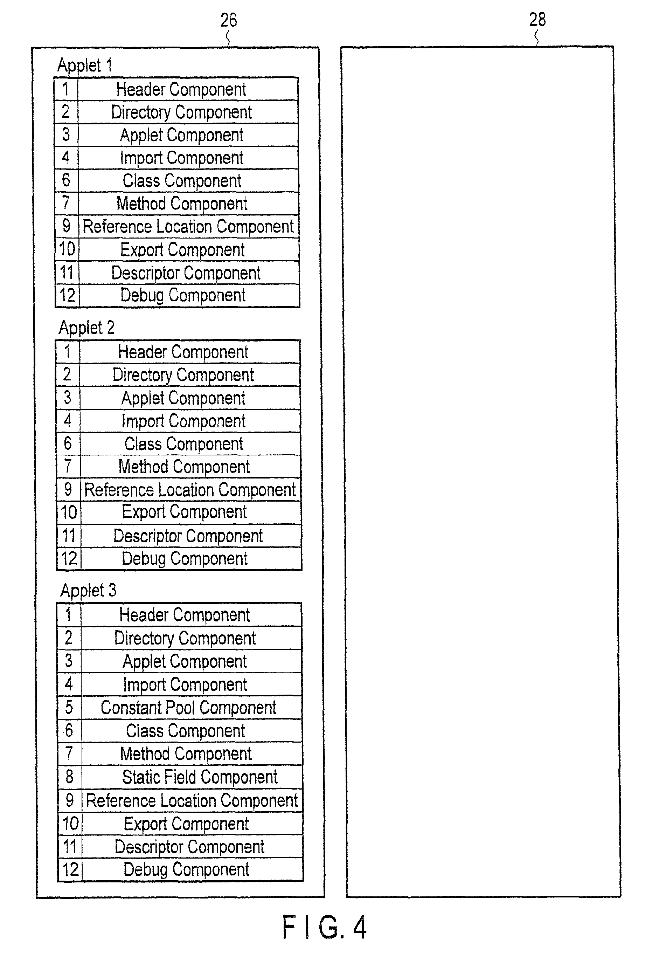

FIG. 4 illustrates an example of the ROM 26 and nonvolatile memory 28 of the IC card 20 before primary issuance. In this example, as illustrated in FIG. 4, an applet 1, an applet 2 and an applet 3 are stored in the ROM 26. Incidentally, applets, which are written in advance in the ROM 26, are referred to as ROM applets. Each applet has its own identifier. Thereby, the CPU 25 of the IC card 20 can identify each applet.

In the meantime, the applet 1 includes Components 1 to 4, Components 6 and 7, and Components 9 to 12. The applet 2 includes Components 1 to 4, Components 6 and 7, and Components 9 to 12. The applet 3 includes Components 1 to 12. At this time point, data has not yet been written in the nonvolatile memory 28.

Then, by transmitting a LOAD command to the IC card 20, the terminal device 10 causes the IC card 20 to execute load of writing all or part of applets in the nonvolatile memory 28 of the IC card 20. Specifically, "load" means write of an applet in a data area (EEPROM). In this case, by a LOAD command from the terminal device 10, the IC card 20 loads the ROM applet in the ROM 26, and writes it on the nonvolatile memory 28.

For example, the terminal device 10 transmits a LOAD command to the nonvolatile memory 28 of the IC card 20. Thereby, the terminal device 10 executes normal load of writing an applet 4, which is not present in the ROM 26, in the nonvolatile memory 28. In this case, the terminal device 10 writes Components 1 to 12 of the applet 4 in the nonvolatile memory 28.

When the write of the applet 4 has been completed, the IC card 20 transmits "LOAD command completed (normal end)" to the terminal device 10. Thereby, the terminal device 10 recognizes that Components 1 to 12 of the applet 4 have been written in the IC card 20.

In the case where all of applets are a target of load, when an applet having the same identifier as a ROM applet has been loaded, the ROM applet is logically deleted.

In addition, the IC card 20 can load an applet in units of a component. Incidentally, when a plurality of components are designated by a one-time LOAD command, the IC card 20 can load the designated components in the nonvolatile memory 28. In this case, the IC card 20 can additionally load part of the components of the applet, which has the same identifier as the ROM applet, in the nonvolatile memory 28.

For example, the terminal device 10 transmits a LOAD command for writing part (Components 5 and 8) of the components of the applet 1 in the nonvolatile memory 28 of the IC card 20.

Since the applet 1 is the applet stored in the ROM 26, the IC card 20 recognizes that the received LOAD command instructs additional load. The IC card 20 identifies components which are missing in the applet 1 stored in the ROM 26. The IC card 20 stores the identified components in the nonvolatile memory 28.

In the case of the example of FIG. 4, the IC card 20 recognizes that Components 5 and 8 are missing in the applet 1 stored in the ROM 26. In this case, the IC card 20 stores Components 5 and 8 in the nonvolatile memory 28. Thereby, the terminal device 10 can execute additional load of writing the missing Components 5 and 8 of the applet 1, which exists in the ROM 26, in the nonvolatile memory 28.

When the write of Components 5 and 8 of the applet 1 has been completed, the IC card 20 transmits "LOAD command completed (normal end)" to the terminal device 10. Thereby, the terminal device 10 recognizes that Components 5 and 8 of the applet 1 have been written in the nonvolatile memory 28 in the IC card 20.

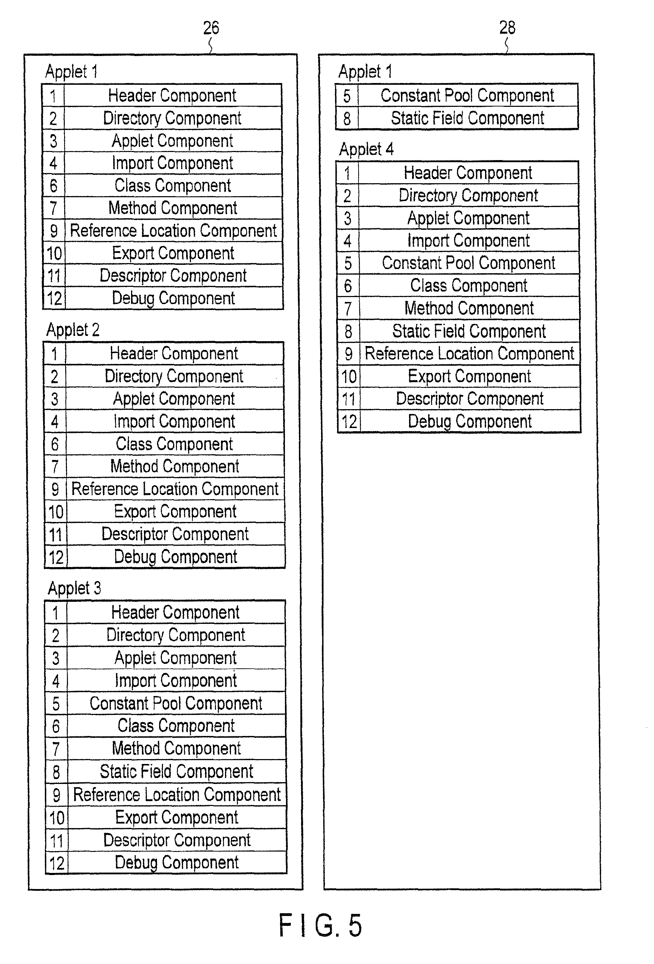

By the above process, as illustrated in FIG. 5, the applet 1 and applet 4 are written in the nonvolatile memory 28. In other words, the nonvolatile memory 28 stores the applet 1 and applet 4.

The applet 1 stored in the nonvolatile memory 28 includes Components 5 and 8. In addition, the applet 2 stored in the nonvolatile memory 28 includes Components 1 to 12.

Next, the terminal device 10 transmits an INSTALL command to the IC card 20, thereby executing install for generating an instance on the nonvolatile memory 28, from a target applet on the ROM 26 or nonvolatile memory 28.

The instance includes a code for causing the CPU 25 to execute one task or a series of tasks. Specifically, "install" means conversion of an applet, which is stored by the ROM 26 or nonvolatile memory 28, to an applet in a state which is executable by the CPU 25.

For example, when all applets are stored in the ROM 26 or nonvolatile memory 28, the IC card 20 reads out an applet, which is designated by the INSTALL command, from the ROM 26 or nonvolatile memory 28, and generates an instance of the read-out applet on the nonvolatile memory 28.

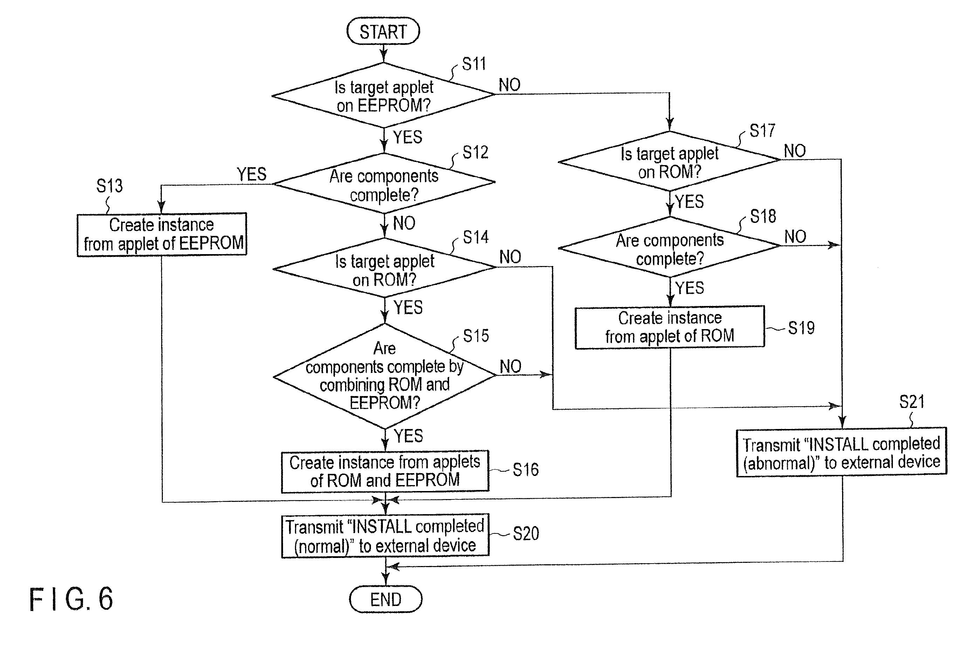

FIG. 6 illustrates an example of install by the IC card 20.

To start with, when the IC card 20 has received an INSTALL command, the IC card 20 determines whether an applet (target applet), which has been designated by the INSTALL command, is stored by the nonvolatile memory 28 (step S11).

If the target applet is stored by the nonvolatile memory 28, the IC card 20 determines whether the main components of the target applet, which has been designated by the INSTALL command, are stored by the nonvolatile memory 28 (step S12).

If the main components of the target applet are stored by the nonvolatile memory 28, the IC card 20 generates an instance from the target applet on the nonvolatile memory 28, and stores the instance in the nonvolatile memory 28 (step S13).

If main components of the target applet are missing, the IC card 20 searches for an applet (ROM applet) with the same identifier on the ROM 26. Thereby, the IC card 20 determines whether the applet of the target is stored by the ROM 26 (step S14).

If the applet of the target is stored by the ROM 26, the IC card 20 reads out the applet of the target from the ROM 26. Thereby, the IC card 20 reads out missing components from the ROM 26. The IC card 20 determines whether the main components of the target applet are complete (step S15).

If the main components are complete, the IC card 20 reads out the target applet from both the ROM 26 and nonvolatile memory 28, and generates one instance (step S16). Specifically, the IC card 20 reads out missing components from the ROM 26, gathers the main components, and generates the instance from the gathered main components. The IC card 20 stores the generated instance in the nonvolatile memory 28.

In addition, in step S11, if it is determined that the target applet is not stored by the nonvolatile memory 28, the IC card 20 determines whether the target applet, which has been designated by the INSTALL command, is stored by the ROM 26 (step S17).

If the target applet is stored by the ROM 26, the IC card 20 determines whether the main components of the target applet, which has been designated by the INSTALL command, are stored by the ROM 26 (step S18).

If the main components of the target applet are stored by the ROM 26, the IC card 20 generates an instance from the target applet on the ROM 26, and stores the instance in the nonvolatile memory 28 (step S19).

In step S13, step S16 and step S19, if the IC card 20 has successfully generated the instance, the IC card 20 notifies the terminal device 10 of "INSTALL completed (normal end)" as a response, which indicates that the install has normally been completed (step S20).

In addition, if the applet of the target is not stored by the ROM 26 in step S14, if the main components are not complete in step S15, if the target applet is not stored by the ROM 26 in step S17, or if the main components of the target applet are not stored by the ROM 26 in step S18, the IC card 20 abnormally terminates the process.

Specifically, when the main components have not been made complete even with reference to both the ROM 26 and nonvolatile memory 28, the IC card 20 notifies the terminal device 10 of "INSTALL error (abnormal end)" as a response (step S21).

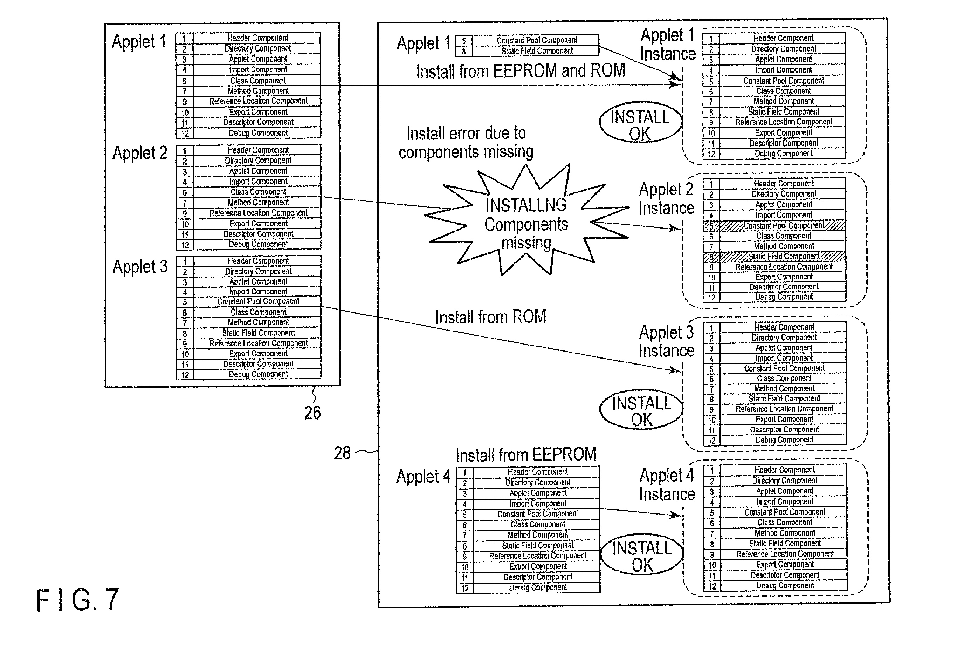

FIG. 7 illustrates an example of the install by the IC card 20. In this example, applets 1 to 4 are installed in the case where the ROM 26 and nonvolatile memory 28 are constructed as shown in FIG. 5.

To begin with, the terminal device 10 transmits an INSTALL command, which instructs install of the applet 4, to the IC card 20. All the main components of the applet 4 are stored in the nonvolatile memory 28. Thus, the IC card 20 creates an instance from the applet 4 in the nonvolatile memory 28, and writes the instance in the nonvolatile memory 28. Further, the IC card 20 notifies the terminal device 10 of "INSTALL completed (normal end)" as a response, which indicates that the install has normally been completed.

Next, the terminal device 10 transmits an INSTALL command, which instructs install of the applet 3, to the IC card 20. Since the applet 3 is not stored by the nonvolatile memory 28, the IC card 20 searches the ROM 26. The ROM 26 stores all the major components of the applet 3. Thus, the IC card 20 creates an instance from the applet 3 in the ROM 26, and writes the instance in the nonvolatile memory 28. Further, the IC card 20 notifies the terminal device 10 of "INSTALL completed (normal end)" as a response, which indicates that the install has normally been completed.

Next, the terminal device 10 transmits an INSTALL command, which instructs install of the applet 1, to the IC card 20. The applet 1 is stored by the nonvolatile memory 28. However, of the main components, Components 1-4, Components 6 and 7 and Components 9 and 10 are missing. Thus, the IC card 20 searches the ROM 26. The ROM 26 stores Components 1-4, Components 6 and 7 and Components 9 and 10 of the applet 1.

The IC card 20 can make complete the main components of the applet 1 by combining the components stored by the nonvolatile memory 28 and the components stored by the ROM 26. The IC card 20 creates an instance from the applet 1 in each of the ROM 26 and nonvolatile memory 28, and writes the instance in the nonvolatile memory 28. Further, the IC card 20 notifies the terminal device 10 of "INSTALL completed (normal end)" as a response, which indicates that the install has normally been completed.

Next, the terminal device 10 transmits an INSTALL command, which instructs install of the applet 2, to the IC card 20. Since the applet 1 is not stored by the nonvolatile memory 28, the IC card 20 searches the ROM 26. The applet 2 is stored by the ROM 26. However, of the main components, Components 5 and 8 are missing. In this case, since the main components of the applet 2 are incomplete, the IC card 20 does not create an instance. In addition, the IC card 20 notifies the terminal device 10 of "INSTALL error (abnormal end)" as a response.

As has been described above, in the IC card 20 according to the embodiment, part of the plural components, which constitute an applet, are stored in the ROM 26, and the other components are stored in the nonvolatile memory 28. When the IC card 20 executes install of an applet, the IC card 20 refers to the nonvolatile memory 28, determines whether the main components of the applet that is to be installed are complete, and refers to the ROM 26 when the main components are not complete. When the main components are made complete by the components stored in the ROM 26 and the components stored in the nonvolatile memory 28, the IC card 20 generates an instance and writes the instance in the nonvolatile memory 28.

Thereby, even when the main components of the applet are dividedly stored in the ROM 26 and nonvolatile memory 28, the IC card 20 can generate an instance. According to this structure, the applet can be dividedly stored in the ROM 26 and nonvolatile memory 28 in units of a component.

Thereby, more applets can be stored in the ROM. As a result, applets, which correspond to various purposes of use, can be stored in the ROM 26, and therefore the cost of the IC card 20 can be reduced. Specifically, the size of ROM applets can be reduced, the ROM capacity can be reduced, and the hardware cost can be reduced.

In addition, the components of the applet are classified into components which are not frequency altered, and components which are frequently altered, and the components which are not frequency altered are stored in the ROM 26. Thereby, at a time of version upgrade of the applet, it is possible to adapt to the version upgrade by simply changing the load data, that is, the data in the nonvolatile memory 28. In addition, even when the ROM 26 is taken away, the risk of execution and analysis of the applet can be reduced since the components are not complete.

As a result, it is possible to provide an IC card with a higher convenience, a portable electronic device, and a control method of an IC card.

Besides, the IC card 20 may be configured to prohibit generation of an instance based on an applet, the generation of an instance of which failed. For example, when main components of an applet, which has been designated by an INSTALL command, are stored neither in the nonvolatile memory 28 nor in the ROM 26, the IC card 20 executes such setting as to prohibit generation of an instance based on the applet designated by an INSTALL command. Specifically, the IC card 20 writes in the nonvolatile memory 28 information which indicates whether generation of an instance based on this applet is to be permitted or not. Thereby, the IC card 20 can prohibit generation of an instance based on a predetermined applet.

In addition, the IC card 20 may be configured to prohibit load of an applet which was not used in generation of an instance, and generation of an instance based on an applet which was not used in generation of an instance. For example, when the IC card 20 has generated an instance based on an applet designated by an INSTALL command, the IC card 20 prohibits load of other applets in the nonvolatile memory 28, and generation of an instance based on other applets stored by the ROM 26 and nonvolatile memory 28. In short, the IC card 20 prohibits generation of an instance based on applets other than the applet designated by the INSTALL command. Thereby, unlawful use and tampering of the IC card 20 can be prevented.

The functions described in each of the above-described embodiments can be not only configured by using hardware, but can also be realized by installing in a computer a program in which the respective functions are described by using software. In addition, the respective functions may be configured by selecting either software or hardware, where necessary.

The present invention is not limited directly to the above-described embodiment. At the stage of practicing the invention, the structural elements may be modified and embodied without departing from the spirit of the invention. Further, various inventions may be made by suitably combining a plurality of structural elements disclosed in the embodiment. For example, some of the structural elements disclosed in the embodiment may be omitted. Further, structural elements in different embodiments may be combined where necessary.

### Reference Signs List

1...IC card process system, 10...Terminal device, 11...CPU, 12...ROM, 13...RAM, 14...Nonvolatile memory, 15...Card reader/writer, 17...Operation module, 18...Display, 19...Power supply module, 20...IC card, 21...Main body, 22...IC module, 23...IC chip, 24...Communication module, 25...CPU, 26...ROM, 27...RAM, 28...Nonvolatile memory, 31...Power supply module, 32...Logic module.

## Claims

1. An IC card which executes a process in accordance with a command transmitted from an external device, comprising:
first storage means for pre-storing an application including a plurality of structures;
reception means for receiving a command transmitted from the external device; and
second storage means for identifying, when a write command for writing the application stored by the first storage means has been received by the reception means, a structure missing in the application stored by the first storage means, and storing the identified structure.

2. The IC card of Claim 1, wherein the first storage means includes a ROM in which an application including a plurality of components is prestored, and
the second storage means includes a rewritable nonvolatile memory, identifies, when the write command is a load command, a component missing in the application stored by the ROM, and stores the identified component in the nonvolatile memory.

3. The IC card of Claim 2, further comprising control means for generating, when an install command has been received by the reception means, an instance based on components of the application stored by the ROM and components of the application stored by the nonvolatile memory.

4. The IC card of Claim 3, wherein the control means determines, when the install command has been received by the reception means, whether main components of an application designated by the install command are stored in the nonvolatile memory, and generates, when the main components are stored in the nonvolatile memory, an instance based on the main components stored by the nonvolatile memory.

5. The IC card of Claim 4, wherein the control means determines, when the main components are not stored in the nonvolatile memory, whether a missing main component is stored in the ROM, and generates, when the missing main component is stored in the ROM, an instance by combining the main components stored by the nonvolatile memory and the main components stored by the ROM.

6. The IC card of Claim 5, wherein the control means prohibits, when the missing main component is not stored in the ROM, generation of an instance based on the application designated by the install command.

7. The IC card of any one of Claims 3 to 5, wherein the control means prohibits, when an instance has been generated, load in the nonvolatile memory and generation of an instance based on other applications stored by the ROM and the nonvolatile memory.

8. The IC card of Claim 1, further comprising:
an IC module including the respective means; and
a main body in which the IC module is disposed.

9. A portable electronic device which executes a process in accordance with a command transmitted from an external device, comprising:
first storage means for pre-storing an application including a plurality of structures;
reception means for receiving a command transmitted from the external device; and
second storage means for identifying, when a write command for writing the application stored by the first storage means has been received by the reception means, a structure missing in the application stored by the first storage means, and storing the identified structure.

10. A method of controlling an IC card including first storage means for pre-storing an application including a plurality of structures, and second storage means which is rewritable, the IC card executing a process in accordance with a command transmitted from an external device, the method comprising:
receiving a command transmitted from the external device; and
identifying, when a write command for writing the application stored by the first storage means has been received, a structure missing in the application stored by the first storage means, and storing the identified structure in the second storage means.
